**Europäisches Patentamt**

**European Patent Office**

**Office européen des brevets**

(19)

(11) Publication number: **0 141 886**
**B1**

(12) **EUROPEAN PATENT SPECIFICATION**

(45) Date of publication of patent specification: **12.10.88**

(51) Int. Cl.⁴: **G 01 S 13/44, H 01 Q 25/02**

(21) Application number: **83306840.6**

(22) Date of filing: **09.11.83**

(54) **Monopulse detection systems.**

(43) Date of publication of application:
**22.05.85 Bulletin 85/21**

(45) Publication of the grant of the patent:
**12.10.88 Bulletin 88/41**

(84) Designated Contracting States:
**DE FR IT NL**

(56) References cited:
**FR-A-1 470 437**
**FR-A-2 345 825**
**US-A-3 576 579**

(73) Proprietor: **The Secretary of State for Defence in Her Britannic Majesty's Government of the United Kingdom of Great Britain and Northern Ireland Whitehall London SW1A 2HB (GB)**

(72) Inventor: **Halford, Gordon John 34 Inglewood Drive Bognor Regis West Sussex (GB)**

(74) Representative: **Riddle, Norman Arthur et al Procurement Executive Ministry of Defence Patents 1A(4), Room 2014 Empress State Building Lillie Road London SW6 1TR (GB)**

Courier Press, Leamington Spa, England.

## Description

The invention relates to detector arrays used in active or passive detection systems for producing monopulse tracking.

Conventional monopulse tracking systems require three channels to define the positions of targets within the beams of an array of detectors. Two signal difference channels are required to give information on the target offset in two perpendicular directions and a sum channel gives amplitude information. Comparison of the magnitude and sign of these difference signals with the sum signals then gives a target's position relative to the centres of the beams. US—A—3576579 discloses a phased monopulse radar array wherein there are formed a sum beam and two difference beams for elevation and azimuth. The signals in the sum and two difference beams may be regrouped and weighted as taught in FR—A—1470437.

The object of the present invention is to provide an alternative form of monopulse detection system which requires only two channels to determine the position of targets and is particularly relevant to circular arrays.

The invention provides a monopulse system according to claim 1.

The invention thus requires only two channels, one of which produces a sum beam and the other a difference beam wherein the relative amplitudes determine the target's angular offset and the relative phases determine the direction of this off-set as projected on the plane of the array.

The array may be a uniform distribution of detectors as for example by placing detectors at the interstices of a rectangular grid. However in order to reduce the overall system complexity the invention may also be applied to a thinned array wherein selected detectors are omitted from the uniform array.

In the preferred arrangement the array consists of waveguide apertures, dipoles or similar elements for the radiation and reception of r.f. energy. During reception each element may be connected to a receiver which amplifies and/or converts to a lower frequency the energy emitted or reflected by targets. The separate outputs are then preferably passed through selectable phase delays employed for beam steering. The separate phase delayed outputs are added directly to form the sum beam and are also added after applying the fixed polar phase delays to form the difference beam.

With the selectable phase delays set to zero the sum and difference beams are circularly symmetric about the normal to the plane of the array with a central peak and a central null respectively. By applying phase delays linearly dependent on the positions of the elements in the array, the phase plane may be tilted relative to the plane of the array, thereby steering the beams.

Circuitry may be included in the system to automatically steer the sum and difference beams to maintain a target on the axis of the sum beam.

Side lobes in the radiation patterns of both the sum and the difference beams may be attenuated by carrying out the addition of the respective signals in the two channels in weighting circuits, wherein each detector output is weighted as a function of the distance of the detector from the centre of the array.

The fixed polar 0—2π phase delays applied to the receiver outputs in the difference channel may be introduced by appropriate lengths of transmission line connecting the receivers to the difference channel addition circuit.

In order that these features may be more fully appreciated the invention will now be described by way of example only with reference to the accompanying drawings of which:

Figure 1 is a schematic arrangement to illustrate a monopulse radar tracking antenna;

Figure 2 is a functional circuit diagram of a monopulse tracking radar;

Figure 3 is a circuit diagram of signal processing circuits in a conventional monopulse radar;

Figure 4 is a circuit diagram of signal processing circuits according to the invention for producing a polar coordinate monopulse radar;

Figure 5 is a geometrical representation of the planar array used to define the polar coordinate monopulse radar; and

Figure 6 illustrates the radiation patterns (response curves) of the two beams of the polar monopulse radar.

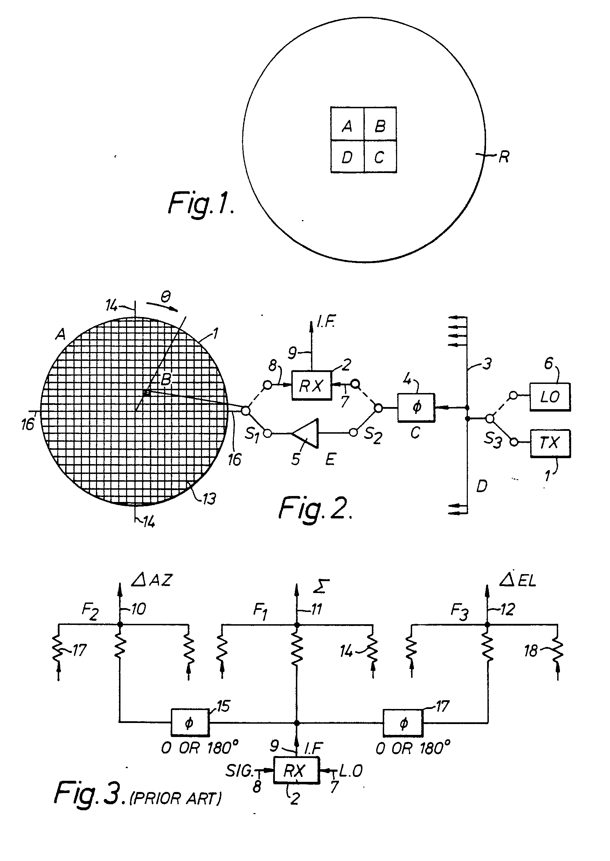

Monopulse systems started with the use of four horn aerials in a square formation feeding a reflector. A typical arrangement is shown in Figure 1 wherein the four rectangular horns A, B, C and D are placed on the axis of a reflector R. The respective signals received from the horns A to D may be respectively added and subtracted to give a sum signal S and two difference signals $\Delta x$ and $\Delta y$ as follows:

$$S=A+B+C+D$$

$$\Delta x=(A+D)-(B+C)$$

$$\Delta y=(A+B)-(C+D)$$

By comparing the magnitude and sign of the difference signals $\Delta x$ and $\Delta y$ with the sum signal S an azimuth and an elevation servo motor connected to the aerial system can be driven in the appropriate directions to reduce the difference signals to zero and so keep track of a target.

This system of separate $\Delta x$ and $\Delta y$ signal channels had been adopted in conventional aerial arrays employing a centralised transmitter and receivers with r.f. feeder networks to isolate the sum and the two difference signals. Since the feeder networks are normally disposed horizontally and vertically the provision of separate rectangular coordinate $\Delta x$ and $\Delta y$ difference signal channels is a logical arrangement. However this is no longer necessary in an electronically scanned active array in which each element or small group of elements within the array is associated with a separate receiver. It is now possible to provide phase shifts by IF or digital processing. With this type of processing two or more outputs of any desired phase can be obtained from each receiver with no loss of signal to noise ratio.

Figure 2 shows a planar antenna array A, circular or near-circular in shape, which is fully or partially filled with antenna elements B. Each of the elements B is connected to a transmitter 1 or a receiver 2 according to whether the associated switches $S_1$, $S_2$ and $S_3$ are respectively in the lower position (as shown) or the upper position.

During transmission, power from the transmitter 1 is fed via a divider 3 to all the radiating antenna elements B via respective phase shifters 4. The output from each phase shifter 4 may be fed via an optional amplifier 5 to the antenna element B.

During reception, the divider 3 is used to feed power for a local oscillator 6 via the respective phase shifters 4 and inputs 7 to rf mixers in the receivers 2. Signals received in the antenna elements B are fed to inputs 8 in the respective receivers 2 where they are down-converted to an IF frequency signal at the receiver output 9. For both transmission and reception the direction of maximum gain—the main beam—is controlled by the settings of the phase shifters 4.

In the conventional system the output signal from each receiver 2 is processed as shown in Figure 3 to provide three IF outputs 10, 11 and 12. For the sum signal output 11 (equivalent to S) all the receiver outputs 9 have equal path lengths to the resistor network F, where they are summed. In most cases signals received by antenna elements 13 towards the edge of the array A have additional resistive attenuation 14 (say) in order to suppress side-lobes in the antenna sensitivity pattern. For the azimuth signal output 10 (equivalent to $\Delta$x) the signals from all the antenna elements to the left of the centre line 14 of the array A are summed in anti-phase to those in the right in the network $F_2$. Thus the signal from each receiver output 9 is fed to the network $F_2$ via a phase delay 15 set to 0 or $\pi$ radians depending upon whether the associated antenna element B is respectively to the left or right of the array centre line 14. Similarly for the elevation signal output 12 (equivalent to $\Delta$y) signals from antenna elements above the array centre line 16 are summed in antiphase to those below in the network $F_3$. Signals from each receiver output 9 are fed via a phase delay 17 to the network $F_3$ with the phase delay set to 0 or $\pi$ radians depending upon whether the associated antenna elements are respectively above or below the line 16. In both of these difference outputs 10 and 12 low side-lobes are achieved by attenuating or weighting the individual signal amplitudes by an appropriate choice of resistor 17 or 18 depending on the distances of the individual elements from the respective centre lines 14 and 16 as well as from the centre of the array.

The signals in the three IF outputs 10—12 can then be processed in three identical channels. Finally after separation in known manner by range gates the phase and amplitude of the signals in the difference channels are compared with phase and amplitude of the signal in the sum channel to determine the angular offset of targets in the horizontal and vertical directions.

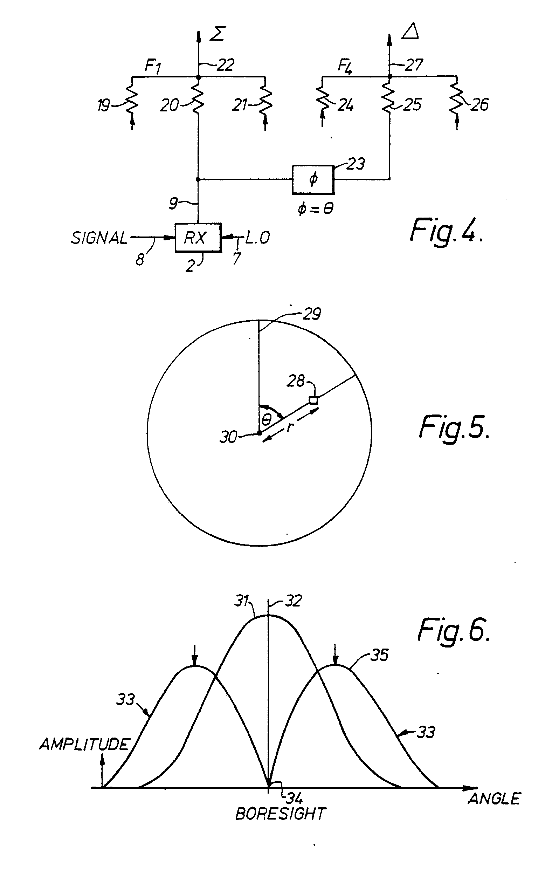

According to the present invention the circuit arrangement shown in Figure 4 is used in cooperation with the antenna array A and circuitry shown in Figure 2. The invention replaces the conventional rectangular cartesian co-ordinate system by applying polar coordinate dependent phases to produce a polar monopulse radar system.

As before the outputs 9 from the receivers 2 associated with each antenna element B in the array A are summed in a weighting network F, of resistors 19—21 (of which only three are shown) to produce a conventional sum signal ($\Sigma$) at the output 22 from the network $F_1$. The output 9 from each receiver 2, however, is also applied via a fixed polar phase delay 23 ($\phi$) to a second weighting network $F_4$ of resistors 24—26 to produce a signal weighted output difference signal 27 ($\Delta$). The fixed polar phase delay 23 introduces a phase shift for each antenna element B equal to the angle $\theta$ of the element measured in a clockwise sense from the array centre line 14. This is achieved by using appropriate lengths of cable to connect the receivers 2 to the network $F_4$. The polar monopulse thus requires only two channels with two weighting networks $F_1$ and $F_4$ comapred with the three networks required in the conventional Figure 3 arrangement. In addition, amplitude weighting in the $F_4$ network of the difference channel depends only on the distance of the antenna element from the centre of the array i.e. there is circular symmetry for this channel as well as for the sum channel. The sum output 22 ($\Sigma$) and the difference output 27 ($\Delta$) are then combined to determine the angular position of the target uniquely by taking the amplitude ratio $\Delta/\Sigma$ to give the angular offset of the target from the boresight direction, and the phase difference $\phi_\Sigma - \phi_\Delta$, between the two outputs to give the radial direction of the target relative to the centre line 14.

In a circular array of detectors a phase mode can be selected such that the phase of the individual elements varies linearly with their angular position, with total phase of $2\pi n = 360°$, where n is an integer. It is then possible by suitably phased addition of the various modes to generate a beam or a null in particular directions in the plane of the array. This consideration is extended to a circular planar array in the present invention by considering what happens in planes normal to the array. Figure 5 indicates a typical antenna element 28 in a planar array located at an angle $\theta$ from the array centre line 29 and a distance r from the centre 30 of the array.

The amplitude of excitation of the array is a function of the radial distance r only and is represented by:

Amplitude=f(r)

If n=0, there is a constant phase over the face of the array and a beam is formed normal to it. For the sum ($\Sigma$) pattern n is therefore chosen to be zero. The cross-section of the resulting beam is indicated by the pattern 31 in Figure 6 as a symmetrical beam centred on the boresight 32 (normal to the plane of the array, through the array centre 30). For the polar difference ($\Delta$) beam n is chosen to be 1. In this case the amplitude excitation of the array as shown by the pattern 33 is symmetrical with a null 34 in the bore-sight direction 32 surrounded by an annular peak 35, constant in amplitude, but with a 360° change of phase around it.

Thus, if a target is within the sum ($\Sigma$) beam 31 the ratio of the amplitudes of the signal returns in the sum 31 and polar difference 33 beams indicates the angular distance of the target off boresight. Comparison of the phases of the two returns ($\phi_\Sigma : \phi_\Delta$) then indicates the radial direction of the target. It is also possible to choose integer values of n greater than 1. This gives higher angular resolution at the expense of ambiguity.

Although not shown in Figure 6, for the purpose of simplicity, a uniform amplitude distribution in a difference pattern generally leads to high sidelobes as well as a lower monopulse angular sensitivity. In the usual rectangular coordinate monopulse system lower side-lobes and greater angular sensitivity are obtained by applying a linear taper in amplitude proportional to the distance of the antenna element from the centre of the array. This is also true for the polar coordinate monopulse system. It can be shown in the latter case that this tapering results in a difference radiation pattern of circular symmetry with a cross-section identical to that of the conventional difference pattern, though with a doubling of receiver noise. The side-lobes can be further lowered by reducing the amplitude close to the edge of the array, but in this case the polar monopulse does not correspond exactly with the conventional difference pattern.

With a uniform phase across the array as described above the sum beam is aligned on the boresight i.e. along the array axis perpendicular to the plane of the array. In order to steer the beams to some other direction a uniform phase slope has to be applied across the face of the array. The uniform phase slope is applied in known manner by setting the phase delays in the phase shifters 4 so as to be linearly dependent on the positions of the respective detectors in the array. In the case of the polar difference beam the same phase slope must be added to the phase mode.

The annular peak of the difference beam will remain undistorted in terms of sin $\alpha$ (where $\alpha$ is the angle from boresight), however in terms of $\alpha$ it will appear somewhat egg-shaped. It may therefore be preferable to perform the calculation of the position of a target offset from the null in terms of sin $\alpha$ space and then convert to actual angles. In general the phase shifts applied to the individual antenna elements will be quantised (as for the conventional monopulse) and this quantisation introduces an angular error. The angular error will also be increased by reducing the number of antenna elements as in conventional thinned arrays. It can be shown that the angular accuracy of the polar monopulse is independent of direction, and equal to that which the conventional monopulse achieves in directions at 45° to the centre line axis 14 of array.

The polar difference beam of the present invention is more difficult to set up than the conventional monopulse since it involves radial amplitude and circumferential phase changes across the face of the array. By comparison each conventional monopulse difference beam involves amplitude changes in two dimensions but with a single phase reversal at the central axis.

The polar monopulse however requires only two channels instead of three for tracking. This gives a saving of one third in the cost of signal processing and in such auxiliaries as jamming cancellation loops. Apart from the example described above the invention is applicable to any detection system in which both the phase and amplitude of the individual elements is preserved. The combining networks can be at rf, if, or lf or alternatively digital signals including phase information can be combined in a computer. In a further modification the outputs from small groups or sub-arrays of antenna elements can be combined as for the individual antenna elements, described.

**Claims**

1. A monopulse system for detecting electromagnetic energy received from a target comprising a planar array (13) of detectors (B, 28) responsive to the received energy, a sum channel ($F_1$) for adding together all the outputs (9) from all the detectors (B, 28), a difference channel ($F_4$), and means to derive the position of the target from the output signals $\Sigma$ and $\Delta$ of the sum and difference channel, characterised in that:

there is provided only one difference channel ($F_4$) arranged to apply to the output (9) of each detector a fixed polar phase delay $\phi$ (23) which is equal to the angular position $\theta$ of the respective detector in the plane of the array (13) and further to add together the phase delayed signals formed thereby, and in that the means for deriving the position of the target uses the amplitude ratio $\Delta/\Sigma$ to give the angular offset of the target from the boresight direction and the phase difference $\phi_\Sigma - \phi_\Delta$ to give the angle of the target relative to a line (14, 29) extending in the plane of the array through the array center.

2. A monopulse detection system according to claim 1 characterised in that during reception each element may be connected to a receiver which amplifies and/or converts to a lower frequency the energy emitted or reflected by targets.

3. A monopulse detection system according to claim 1 or claim 2 characterised in that the output from each detector element is also connected to a selectable phase delay employed for beam steering, the outputs from the selectable phase delays being added directly to form the sum beam and being also added after applying the fixed polar phase delays to form the difference beam.

4. A monopulse detection system according to claim 3 characterised in that it includes circuitry to automatically steer the sum and difference beams to maintain a target on the axis of the sum beam.

5. A monopulse detection system according to any one preceding claim characterised in that side lobes in the radiation patterns of both the sum and the difference beams are attenuated by carrying out the addition of the respective signals in the two channels in weighting circuits, wherein each detector output is weighted as a function of the distance of the detector from the centre of the array.

6. A monopulse detection system according to any one preceding claim characterised in that the fixed polar 0—2π phase delays applied to the receiver outputs in the difference channel are introduced by connecting appropriate lengths of transmission line between the receivers and the difference channel addition circuit.

**Patentansprüche**

1. Monopulssystem zum Erfassen von von einem Zielobjekt empfangener elektromagnetischer Energie, mit einer ebenen Anordnung (13) von Fühlern (B, 28), die auf die empfangene Energie ansprechen, einem Summenkanal (F1) zum zusammenaddieren der Ausgangssignale (9) sämtlicher Detektoren (B, 28), einem Differenzkanal (F4) und Mitteln zum Ableiten der Position des Zielobjekts aus den Ausgangssignalen Σ und Δ des Summenkanals und des Differenzkanals, dadurch gekennzeichnet, daß nur ein Differenzkanal (F4) vorgesehen ist, der das Ausgangssignal (9) jedes Detektors mit einer festen polaren Phasenverzögerung φ (23) beaufschlagt, die gleich der Winkelposition θ des betreffenden Detektors in der Ebene der Anordnung (13) ist, und der außerdem die dadurch phasenverzögerten Signale zusammenaddiert, und daß die Mittel zum Ableiten der Position des Zielobjekts das Amplitudenverhältnis Δ/Σ zum Erhalt des Winkelversatzes des Zielobjekts von der Sichtlinie und die Phasendifferenz φΣ—φΔ zum Erhalt der Winkellage des Zielobjekts mit Bezug auf eine in der Ebene der Anordnung durch die Anordnungsmitte verlaufenden Linie (14, 29) verwenden.

2. Monopulserfassungssystem nach Anspruch 1, dadurch gekennzeichnet, daß während des Empfangs jedes Element an einen Empfänger angeschlossen sein kann, der die vo Zielobjekten emittierte oder reflektierte Energie verstärkt und/oder in eine niedrigere Frequenz umwandelt.

3. Monopulserfassungssystem nach Anspruch 1 oder 2, dadurch gekennzeichnet, daß das Ausgangssignal jedes Detektorelements außerdem an ein zur Strahlsteuerung verwendetes wählbares Phasenverzögerungsglied angeschlossen ist, wobei die Ausgangssignale der wählbaren Phasenverzögerungsglieder direkt zur Bildung des Summenstrahls addiert werden und außerdem nach Beaufschlagung mit den festen polaren Phasenverzögerungen zur Bildung des Differenzstrahls addiert werden.

4. Monopulserfassungssystem nach Anspruch 3, dadurch gekennzeichnet, daß es eine Schaltung zur automatischen Steuerung der Summen- und Differenzstrahlen zum Halten eines Zielobjekts auf der Achse des Summenstrahls enthält.

5. Monopulserfassungssystem nach einem der vorhergehenden Ansprüche, dadurch gekennzeichnet, daß Seitenlappen des Strahlungsbildes sowohl des Summenstrahls als auch des Differenzstrahls durch Ausführen der Addition der betreffenden Signale in den beiden Kanälen in Gewichtungsschaltungen gedämpft werden, wobei jedes Detektorausgangssignal als Funktion der Distanz des Detektors von der Anordnungsmitte gewichtet wird.

6. Monopulserfassungssystem nach einem der vorhergehenden Ansprüche, dadurch gekennzeichnet, daß die festen polaren 0—2π-Phasenverzögerungen, mit denen die Empfängerausgangssignale im Differenzkanal beaufschlagt werden, durch Anschließen geeigneter Übertragungsleitungslängen zwischen den Empfängern und der Differenzkanal-Additionsschaltung erzeugt werden.

**Revendications**

1. Un système monopulse pour la détection d'énergie électromagnétique reçue à partir d'une cible, comprenant un réseau plan (13) de détecteurs (B, 28) sensibles à l'énergie reçue, une voie de somme (F₁) pour additionner ensemble tous les signaux de sortie (9) de tous les détecteurs (B, 28), une voie de différence (F₄), et des moyens pour déterminer la position de la cible à partir des signaux de sortie Σ et Δ des voies de somme et de différence, caractérisé en ce que:

il existe une seule voie de différence (F₄) conçue de façon à appliquer à la sortie (9) de chaque détecteur un retard de phase polaire fixe φ (23) qui est égal à la position angulaire θ du détecteur respectif dans le plan du réseau (13) et de façon à additionner en outre ensemble les signaux à phase retardée qui sont ainsi formés, et en ce que les moyens destinés à déterminer la position de la cible utilisent le rapport d'amplitude Δ/Σ pour fournir l'écart angulaire de la cible par rapport à la direction de visée, et la différence de phase φΣ—φΔ pour donner l'angle de la cible par rapport à une ligne (14, 29) qui s'étend dans le plan du réseau en passant par le centre du réseau.

2. Un système de détection monopulse selon la revendication 1, caractérisé en ce que pendant la réception, chaque élément peut être connecté à un récepteur qui amplifie et/ou convertit en une fréquence inférieure l'énergie qui est émise ou réfléchie par des cibles.

3. Un système de détection monopulse selon la revendication 1 ou la revendication 2, caractérisé en ce que la sortie de chaque élément détecteur est également connectée à un élément produisant un retard de phase qui peut être sélectionné, employé pour définir la direction du faisceau, et les signaux de sortie des éléments qui produisent un retard de phase pouvant être sélectionné sont directement ajoutés pour former le faisceau de somme, et ils sont également ajoutés après l'application de retards de phase polaires fixés, pour former le faisceau de différence.

4. Un système de détection monopulse selon la revendication 3, caractérisé en ce qu'il comprend des circuits destinés à diriger automatiquement les faisceaux de somme et de différence de façon à maintenir une cible sur l'axe du faisceau de somme.

5. Un système de détection monopulse selon l'une quelconque des revendications précédentes, caractérisé en ce que les lobes latéraux des diagrammes de rayonnement des faisceaux de somme et de différence sont atténués par l'accomplissement de l'addition des signaux respectifs dans les deux voies dans des circuits de pondération, dans lesquels chaque signal de sortie de détecteur est pondéré en fonction de la distance du détecteur par rapport au centre du réseau.

6. Un système de détection monopulse selon l'une quelconque des revendications précédentes, caractérisé en ce que les retards de phase polaires 0—2π fixés qui sont appliqués aux signaux de sortie de récepteurs dans la voie de différence sont introduits en connectant des longueurs de lignes de transmission appropriées entre les récepteurs et le circuit d'addition de la voie de différence.

Fig.1.

Fig.2.

Fig.3. (PRIOR ART)

1

*Fig.4.*

*Fig.5.*

*Fig.6.*

AMPLITUDE

BORESIGHT

ANGLE